# EUROPEAN PATENT SPECIFICATION

(11) **EP 1 511 134 B1**
(45) Date of publication and mention of the grant of the patent: **23.02.2011**
(21) Application number: 04103952.0
(22) Date of filing: 18.08.2004
(51) Int. Cl.: H01S 3/23, H01S 3/105

(54) **Pulsed laser oscillator in single longitudinal mode stabilised in frequency and relative operative method**
Gepulster, frequenz-stabilisierter longitudinal-monomodiger Laseroszillator und dementsprechendes Betriebsverfahren
Oscillateur laser à impulsions, à mode longitudinal unique et à frequence stabilisée, ainsi que la méthode d'opération correspondant.

(30) Priority: 29.08.2003 IT MI20031675
(43) Date of publication of application: 02.03.2005
(73) Proprietor: CESI-Centro Elettrotecnico Sperimentale Italiano Giacinto Motta S.p.A., 20134 MILANO (IT)
(72) Inventor: Nava, Enzo, I-20063, CERNUSCO SUL NAVIGLIO (MI) (IT); Trespidi, Franco, I-29100, PIACENZA (IT); Stucchi, Emanuele, I-24126, BERGAMO (IT)
(74) Representative: Mittler, Enrico

(56) References cited:
- EP-A- 0 123 198
- EP-A- 0 383 638
- EP-A- 0 534 305
- GB-A- 2 093 630
- JP-A- 9 171 027
- US-A- 4 410 992
- US-A- 5 029 174

## Description

The present invention refers to a pulsed laser oscillator operating in single transversal mode (STM) and an innovative operative method for making this oscillator function in single longitudinal mode (SLM) with particularly stable transmitting frequency over time (±1 MHz rms).

Laser oscillators are currently known that use a solid-state rod as active material (solid state laser).

In these laser oscillators the geometry of the resonator is of great importance as it is responsible for the output characteristics of the beam and of the efficiency of the laser oscillator. The geometrical and spectral characteristics of the laser beam reach the theoretical limits of the Gaussian beams if the laser oscillator oscillates in SLM and in STM.

Generally a resonant cavity comprises an active material that is located between two mirrors that form the cavity. The oscillation in few transversal and longitudinal modes is forced by placing a diaphragm opening in the resonator that acts as a spatial filter; this filter rejects the higher order modes (that have a wide diameter) and lets the lower order modes pass, that is those that have a small transversal section in relation to the active material. The active material consists of a solid-state rod, for example with circular section, with associated pumping system.

The oscillation on a single longitudinal mode can be obtained through the use of a suitable band-pass optic filter.

Another technique to obtain the oscillation of a cavity in single longitudinal mode consists of injecting inside the cavity itself a continuous laser beam coming from a low power source. This continuous laser source is called injection laser; it provides the frequency reference to the entire laser system and the stability in frequency of the entire system is measured in relation to it. The pulsed cavity is tuned to the frequency of the injection laser by moving one of the mirrors of the cavity, for example by means of a piezoceramic translator (commonly called piezoceramic).

In this manner the length of the cavity can be made the same as a whole multiple of the wavelength of the injection laser and the emission of laser pulses in single longitudinal mode can be obtained.

The uses of a laser oscillator of that type are considerable, in particular for remote measurements spatially linked both to the variation of the frequency emitted (as that which comes about for the measurement of the speed of wind) and to the variation of the laser intensity transmitted (measurement of concentration of molecular species present in atmosphere that operate a selective absorption of the laser radiation on the basis of its frequency).

In a pulsed laser oscillator of the type described a control apparatus has to be provided to make the frequency of the pulsed laser stable. A control apparatus of this type is present in the US patent 4918704 and makes provision of the use of an output coupling mirror having a profile of partial reflectivity that is similar to the Gaussian mathematic function.

US 4410992 discloses a pulsed laser oscillator according to the preamble of claim 1.

In view of the state of the technique described, the object of the present invention is to produce a pulsed laser oscillator in single longitudinal mode stabilised in frequency that operates according to a method different from those known up to now.

Another object is to produce an innovative operative method for a pulsed laser oscillator in single longitudinal mode.

In accordance with the present invention, this object is achieved by means of a method as defined in claim 1.

The characteristics and advantages of the present invention will become evident from the following detailed description of an embodiment thereof, illustrated as non-limiting example in the enclosed drawings, in which:
Figure 1 is a schematic representation of a pulsed laser oscillator according to an embodiment of the invention;
Figure 2 is a schematic representation of an electronic control device that is part of the laser oscillator in Figure 1;
Figure 3 is a schematic representation of an embodiment of an additional device included in the laser oscillator in Figure 1;
Figure 4 is a schematic representation of a variant of the device in Figure 3;
Figure 5 is a schematic representation of another variant of the device in Figure 3.

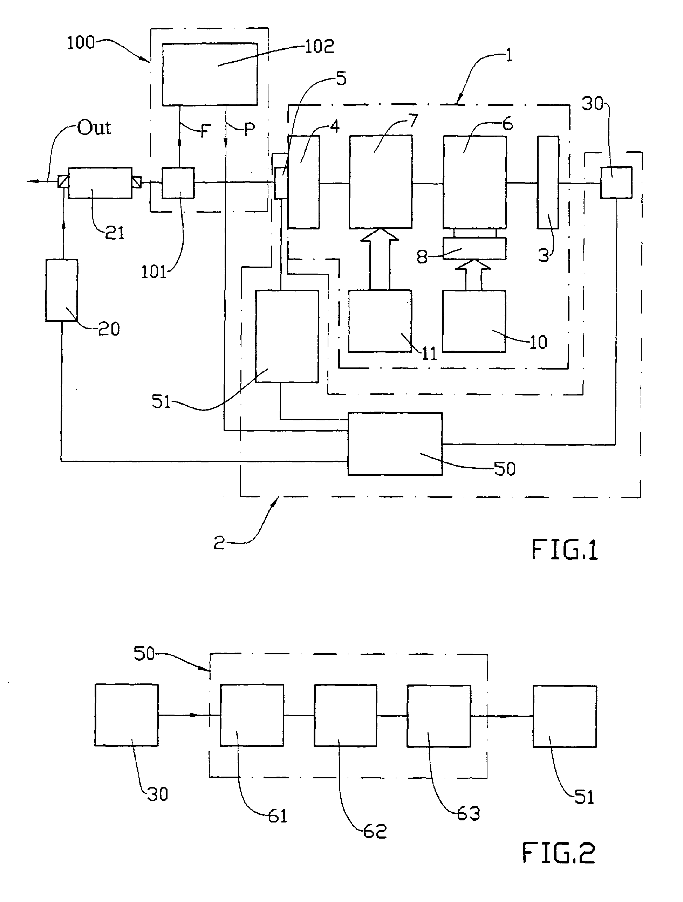

With reference to Figure 1 a pulsed laser oscillator is shown according to an embodiment of the invention, that comprises a resonant cavity 1. The resonant cavity comprises a first fixed mirror 3, a second mobile mirror 4 by means of a piezoceramic translator or "piezoceramic" 5, an active material 6 located on an optical axis between the two mirrors and constituted for example by a rod of Nd:YAG, and an optical shutter 7, for example a Pockels cell, located along said optical axis between the active material 6 and the second mirror 4. The active material 6 is associated to a diode pumping apparatus 8, fed by a suitable feeder 10, which is suited to energize the active material 6 to excite it to emit a radiation laser; the optical shutter 7 is instead driven by a driving device 11.

A low power continuous laser source 20, also called injection laser or continuous wave laser (CW), outside the cavity 1, injects a continuous laser beam in single frequency by means of the mirror 4 inside the cavity 1. As the mirror 4 for the input of the continuous laser is also used for the output of the pulsed laser beam (Out) from the cavity 1, a Faraday isolator 21 is used to separate the continuous laser beam in input into the cavity 1 from the pulsed laser beam pulsed in output from the same cavity 1. The two mirrors 3 and 4, the active material 6 and the optical shutter 7 are aligned with each other and the distance between the two mirrors 3 and 4 constitutes the length of the cavity 1. In the case of the cavity being ring-shaped, the input mirror of the injection and the output mirror of the pulsed laser radiation coincide and the injection and pulsed output bands are separated angularly. The two circulation directions of the injection beam and the pulsed beam coincide (both clockwise, or both anti-clockwise).

The driving device 11 keeps the optical shutter 7 closed during the pumping phase of the active material 6, typically for about 150-200µs, and reopens it immediately after to produce the growth of the pulsed radiation, thus producing the so-called Q-switch.

The injection of the continuous laser beam coming from the source 20 inside the cavity 1 also continues after the pumping phase; said radiation is detected by a photodiode 30 located outside the cavity 1 along the optical axis of the same and near the mirror 3; the signal coming from the photodiode 30 is then measured by an electronic control device 50, which through an amplifier 51 suitably commands the piezoceramic 5 so as to vary the length of the resonant cavity 1. The photodiode 30, the electronic control device 50, the amplifier 51 and the piezoceramic 5 constitute control means 2 of the length of the resonant cavity.

The resonant cavity 1 is used as a Fabry Perot interferometer (FP) and the transmission of the laser beam injected into the cavity itself 1 in the period of time T between two successive laser pulses is continually monitored. The control action on the cavity 1 is obtained by modulating the length of the cavity itself thanks to the command signal sent by the electronic device 50 to the piezoceramic 5 coupled to the mirror 4 and observing the reply of the photodiode 30 to the signal sent; more precisely the length of the cavity 1 is modulated to enable the identification, with the required precision, of the position of the transmission peak of the interferometer detected with the photodiode 30.

Therefore the control action comprises a search phase for the transmission peak of the continuous radiation in the cavity 1 carried out by means of the search for the peak of the signal detected by the photodiode 30, and for determining its position. For this aim the electronic control device 50 comprises search means 61 (Figure 2) and memorisation means 62. On the basis of the result of the search the electronic device 50 makes provision for the positioning of the mirror 4 by means of sending a suitable signal to the amplifier 51, and then to the piezoceramic 5, by means of command means 63.

The waveforms of the signal sent to the piezoceramic 5 in the search phase can be of various types. Both a sinusoidal modulation and a single or double slope sawtooth modulation can be used. The waveforms used for scanning are generated already suitably filtered so as to have a reduced band, compatible with the response times of the piezoceramic 5, so as to avoid shocks to it and the consequent triggering of mechanical resonances which, even if dampened, reduce the performances of the system. In addition, so as to compensate the hysteresis effect of the piezoceramic 5, to define the optimal position, it is advisable to use the measurements obtained by moving the piezoceramic 5 in the same direction as the movement used for the positioning phase. In reality the measurements obtained in the opposite directions, if suitably filtered of the hysteresis, can also provide useful indications on the optimal position of the piezoceramic 5.

At the end of the search phase there is a processing phase, again by means of the electronic device 50, of the measurements to identify the position of the piezoceramic that corresponds to the maximum of energy transmission of the cavity 1 on the photodiode 30. At this point there is the positioning phase, in which the command means 63 provides the piezoceramic 5 with the command for the corresponding movement of the mirror 4; in this manner the length of the cavity 1 is regulated in accordance with the position of the transmission peak detected by the photodiode 30. Said positioning of the mirror 4 comes about before the production of the next pulse (positioning phase).

The control of the length of the cavity cannot come about with continuity since during the emission of the laser pulse it is not possible to carry out the length measurement of the cavity. The photodiode 30 in fact remains "blinded" during the laser pulse because of the high luminous intensity of the pulse itself. Even after the end of the laser pulse, for a given interval of time the photodiode 30 cannot operate to permit the output from the saturation of the preamplifier associated to it. For this reason it is necessary to disable the control means 2 just before the pumping action of the active material 6 and re-enable it after the end of the pulse. During this phase the mobile mirror is brought to the optimal position determined during the scanning phase and left in that position up to the produced pulse. During the production of the laser pulse the control means 2 are open, in this manner everything that comes about during the laser pulse does not alter the length of the resonator preset by the control system. In fact, before the laser pulse several disturbance sources are present caused by the command signals of the optical shutter 7 and by the leading edges of the current pulses that feed the pumping diodes 8, disturbances that could influence the correct functioning of the control apparatus 2. At the end of the pulse the control is re-activated. Because of the vibrations and the acoustic noises that can modify the length of the optical path it is best that the time that lapses between the search phase and the positioning phase is as short as possible. This is to prevent the length of the cavity from varying between the measuring instant and the positioning instant. The delay is determined both by the processing times and the times needed by the piezoceramic 5 to move to the commanded position.

The scanning amplitude of the interferometer in the search phase can be modified while it is functioning so as to improve the sensitivity with which the control is carried out. In this manner, once the position of the transmission peak has been detected, the amplitude of the search scan, that has to be equal to at least one Free Spectral Range (FSR), is suitable reduced around the position of the transmission peak. The reduction can come about progressively or instantaneously in order to reach a minimum value called amplitude of the seal scan. If because of some very intense disturbance the transmission peak should go out of the seal scan field, the control program, that detects the absence of the peak, intervenes resetting the amplitude of the search scan to the maximum value and taking as useful peak (should there be more than one) the one nearest to the centre of the scan. The same action is taken should the position of the transmission peak be found at the ends of the stroke of the piezoceramic 5; the new search scan is carried out starting from the central position of the stroke of the piezoceramic 5. In this manner it is possible to use a very limited field of movements of the piezoceramic that permits an actuator with reduced stroke to be used. A seal limit equal to ±1FSR can be defined so that, if the peak is released because it has reached the edges of the seal limit, the new search scan will find the new transmission peak near the centre of the scan operated by the piezoceramic. The "tracking" of the seal scan to the position of the transmission peak can be made when the fluctuations of the position of the transmission peak are small in comparison to the movement produced by the seal scan. If this should not come about the seal scan would start to fluctuate to keep itself centred at the transmission peak generating instabilities and oscillations of the control system. To avoid these instabilities the seal scan is moved by overlapping an offset that pursues in time the position of the transmission peak. In this manner the scan of the piezoceramic is symmetrical in relation to the position of the peak of the interferometer. The value of the optimal offset is assessed on the basis of the measurements of the position of the peaks previously detected and executing suitable means and interpolations. The weight with which each measurement enters in the assessment of the offset is fixed in accordance with the amplitude of the variations of position of the transmission peak. The same procedure can also be followed in the junction phase between search scan and seal scan.

The method of controlling the laser cavity 1 is carried out in the period of time T that lapses between two successive pulses. This time T can be divided into N periods of time T1 that are not necessarily equal to each other. The first N-1 periods of time T1 are used to carry out the scan of the cavity even several times so as to measure any fluctuations of the length of the cavity (search phase). The last period of time T1 is used to position the mirror of cavity 4 before generating the laser pulse (positioning phase).

The calculation of the optimal position of the cavity can be carried out in various manners. The simplest method is that to consider as optimal position of the piezoceramic that in correspondence with the last transmission peak measured. Another method consists in extrapolating the optimal position using a suitably weighed average of the last positions of the transmission peak measured during the N-1 scans of the search phase.

The control of the length of the resonant cavity operated by the apparatus according to the invention is a control of the predictive type, that is it enables the prior identification which will be the optimal position of the mirror of cavity 4 that will generate a pulse in single longitudinal mode.

Nevertheless the optical path of the radiation laser inside the cavity 1 can still change by effect of the thermal transients that occur during the positioning phase. Said changes of temperature are due, for example, to the heating caused by the pumping of the active means 6 by the diodes 8. These fluctuations of the length of the cavity are systematic and can be compensated by adding a suitable offset to the command of the piezoceramic. Through the degrading of the performances of the diodes with time (diminution of emission at equal energy in input) the value of the offset to be added to the command of the piezoceramic can vary unpredictably, therefore the laser system needs an additional control device 100 that permits the elimination of the changes within the cavity 1 caused by said variations of the characteristics of the components that occur over time. Said control device uses a photodiode or an optical sensor 101 and operates in this manner: it processes the optical signal coming from the pulsed laser by means of a processing device 102, it verifies the effective operation in single longitudinal mode again by means of the device 102, it assesses the movement of the transmitting frequency of the pulsed laser in relation to the value of frequency required again with the device 102, and, if necessary, it corrects the position of the mirror 4 by means of a suitable command to the piezoceramic 5 to again obtain the functioning in single longitudinal mode and to recover said movement in frequency.

The control device 100 can operate in accordance with various methods according to variants to the embodiment of the invention.

A first method according to the embodiment of the invention is based on the measurement of the beating signal generated by the presence of several laser modes. By means of the photodiode 101 the pulsed laser radiation (Out) is periodically detected and measured by the device 102 to verify the presence of a beating between two adjacent modes of the cavity 1. This procedure is carried out by increasing, between one laser pulse and the next one, by a quantity D (much less than the movement equivalent to 1 FSR) the length of the cavity. In this manner while D passes from 0 to the movement equivalent to at least 2 FSR it is possible to understand when the functioning of the laser passed from single mode to multimode. The optimal value of the movement D will be given by that which annuls the amplitude of the beating between the two adjacent modes; as a rather wide interval of movements that annul the beating exists in general, the optimal value can be obtained like the central one between two beating peaks.

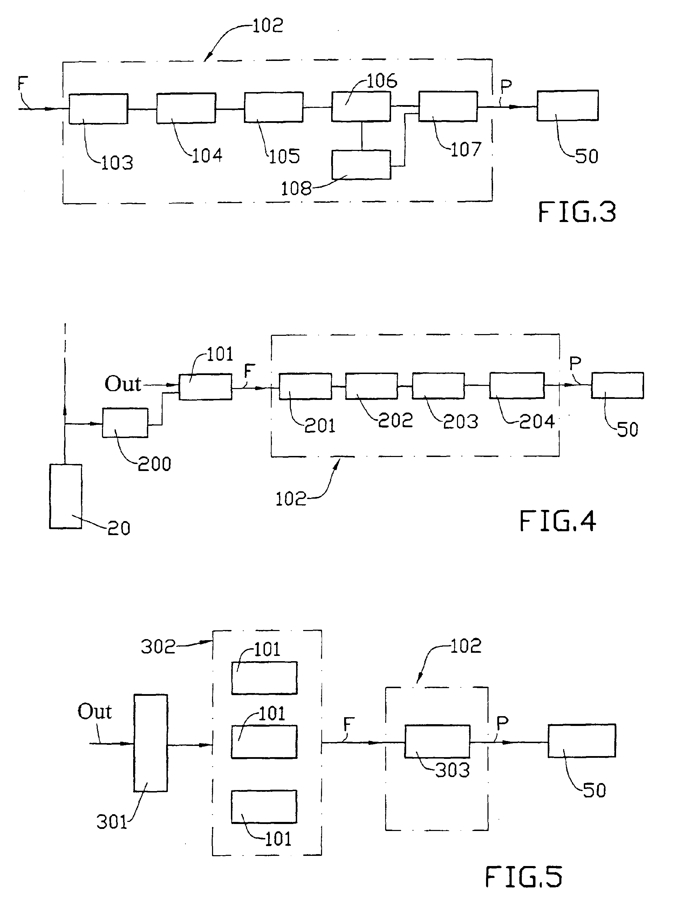

More precisely the photodiode 101 detects the presence of the possible beating between the adjacent modes of the pulsed laser radiation (Out); the signal F coming from the photodiode 101 is sent to the device 102 that comprises, as can be seen in Figure 3, an amplifier 103 and a filter 104 to amplify and filter with a band centred around the value of FSR, the frequency value at which the beating of the adjacent modes occurs, said signal F, a rectifier 105 followed by an integrator 106 measures the amplitude of the beating and a device 107 provides the commands P needed by the piezoceramic 5 between one pulse and the next one, to produce the movements D needed to cover 2 FSR. The purpose of the use of the filter 104, of the rectifier 105 and of the integrator 106 is to detect the carrier generated by the beating at the frequency of the FSR; any other type of demodulation can be used to carry out this operation. At the end of the scan the optimal value of the movement D (which will have to be used by the control system) is that which annuls the amplitude of the beating; a device 108 identifies the optimal movement D and commands the piezoceramic 5 with said optimal movement adding this value to the control algorithm in the form of offset.

A second method in accordance with a variant of the embodiment of the invention is based on the direct measurement of the optical frequency with a heterodyne technique. A part of the signal coming from the pulsed laser radiation (Out) of the cavity 1 is made to beat with a signal obtained by modulating in frequency (for example with an acoustic-optical modulator 200) a portion of the injection beam coming from the continuous laser source 20, as can be seen in Figure 4. The signal obtained in this manner is detected by the photodiode 101 whose signal F in output is sent to the device 102 comprising an amplifier 201 and a filter 202 for amplifying and filtering the signal F. A further device 203 measures the beating frequency of the signal F on each single pulse.

The value of the frequency enables an absolute measurement of the difference in frequency between laser pulse and injector to be obtained. On the basis of this information a device 204 is suited to command the piezoceramic 5 to regulate the movement of the length of the cavity 1 until the error is annulled.

A third method in accordance with a variant of the embodiment of the invention consists in sending a part of the pulsed laser radiation (Out), made suitably divergent, through an Etalon 301 (Figure 5) and measuring the interference fringes with a suitable linear system 302 of photo-sensitive sensors 101. From the analysis of the interference fringes made by the device 102 comprising an analyser 303 it is possible to establish if the laser pulse is in single mode or in multimode and the difference in frequency between pulsed laser and injection laser. Applying the scan as for finding the optimal value of the movement D in the first method, it can be established what the position is in which the pulse emitted is in single mode.

The three methods illustrated can also be used concurrently to improve the result of compensation of the offset.

## Claims

1. Operative method of a pulsed laser oscillator in single longitudinal mode stabilised in frequency, the laser oscillator comprising a resonant cavity (1) including an active material (6) located on an optical axis between at least two mirrors (3, 4),
said method comprising:
the illumination of said active material (6) with a continuous laser beam coming from means (20) outside the resonant cavity (1) to make the laser oscillator operate in single longitudinal mode,
the energizing of said active material (6) to excite it to emit a pulsed laser radiation formed by a succession of output laser pulses (Out) directed towards one (4) of said mirrors (3, 4) and coming out of the resonant cavity (1) through said one mirror (4),
said method comprising the steps of:
modulating the length of the resonant cavity (1) in a search phase of the transmission peak of said continuous laser beam by said resonant cavity (1) in a period of time (T) between the generation of a pulse of said succession of pulses and that of the next pulse,
said search phase comprising the detection of said continuous laser beam transmitted by the resonant cavity (1) through another one (3) of said cavity mirrors (3, 4), the measurement of a signal corresponding to the continuous laser beam detected, the memorization of said measurement and the transmission of a command signal to a piezoceramic translator (5) for the movement of said at least one mirror (4),
processing of the measurements and selection of the position of said at least one mirror (4) corresponding to the detected transmission peak of the resonant cavity (1) during the search phase, said processing taking place prior to a positioning phase,
a positioning phase of said at least one mirror (4) for the control of the length of the resonant cavity (1) in response to the information deriving from said search phase, said positioning phase comprising the movement of said at least one mirror (4) to vary the length of the resonant cavity (1) to assume the selected position corresponding to the detected transmission peak of the resonant cavity (1),
**characterised in that**
only the measurements obtained in said search phase by moving the piezoceramic translator (5) in the same direction as the movement used for the positioning phase are used for said selection of the position of said at least one mirror (4) corresponding to the detected transmission peak of the resonant cavity (1).

2. Method according to claim 1, **characterised in that** it comprises the verification of the operation in single longitudinal mode and the assessment of the movement in frequency of the pulsed laser radiation and the correction of the position of said mirror (4) in response to the results obtained.

3. Method according to claim 2, **characterised in that** it comprises the detection of a beating between adjacent modes of the pulsed laser radiation (Out) in output from said resonant cavity (1), the measurement of the amplitude of said beating, and the command of said piezoceramic (5) to produce movements (D) of at least one of said mirrors (4) so as to cover a given spectral field (2 FSR), the correction of the position of said mirror (4) comprising the selection of the optimal movement (D) that corresponds to the minimum amplitude of the beating or to the central position between two beating peaks and the command of said piezoceramic (5) to carry out said optimal movement.

4. Method according to claim 2, **characterised in that** it comprises the detection of a beating between a portion of the pulsed laser radiation (Out) in output from said resonant cavity (1) and a portion modulated in frequency of said continuous laser radiation and the measurement of the frequency of said beating, the correction of the position of said mirror (4) comprising the determination of the optimal movement (D) of said mirror (4) on the basis of the difference between said frequency measurements and the frequency of the continuous radiation and the command of said piezoceramic (5) to carry out said optimal movement.

5. Method according to claim 2, **characterised in that** it comprises the detection of the interference fringes of a portion of the pulsed radiation (Out) in output from the resonant cavity (1), that is made to pass through an Etalon, the analysis of said interference fringes, the verification that the signal analysed is a multimode signal, the detection of a beating between adjacent modes of said multimode signal, the measurement of the amplitude of said beating, and the command of said piezoceramic (5) to produce movements (D) of said mirror (4) so as to cover a given spectral field (FSR), the correction of the position of said mirror (4) comprising the selection of the optimal movement (D) that corresponds to the minimum amplitude of the beating and the command of said piezoceramic (5) to carry out said optimal movement.

## Patentansprüche

1. Betriebsverfahren eines frequenzstabilisierten, gepulsten Laseroszillators im Monolängsmode, wobei der Laseroszillator einen Resonanzhohlraum (1) aufweist, der aktives Material (6) enthält, das auf einer optischen Achse zwischen wenigstens zwei Spiegeln (3, 4) lokalisiert ist,
wobei das Verfahren folgendes aufweist:
die Beleuchtung des aktiven Materials (6) mit einem kontinuierlichen Laserstrahl, der von einer Einrichtung (20) außerhalb des Resonanzhohlraums (1) kommt, um zu veranlassen, dass der Laseroszillator im Monolängsmode arbeitet,
das Anregen des aktiven Materials (6), um es zu derart zu erregen, dass es eine gepulste Laserstrahlung aussendet, die durch eine Abfolge von ausgegebenen Laserpulsen (Out) ausgebildet ist, die zu einem (4) der Spiegel (3, 4) gerichtet sind und durch den einen Spiegel (4) aus dem Resonanzhohlraum (1) kommen,
wobei das Verfahren die folgenden Schritte aufweist:
Modulieren der Länge des Resonanzhohlraums (1) in einer Suchphase der Transmissionsspitze des kontinuierlichen Laserstrahls durch den Resonanzhohlraum (1) in einer Zeitperiode (T) zwischen der Erzeugung eines Pulses der Abfolge von Pulsen und derjenigen des nächsten Pulses,
wobei die Suchphase die Detektion des durch den Resonanzhohlraum (1) gesendeten Laserstrahls durch einen anderen (3) der Hohlraumspiegel (3, 4), die Messung eines Signals entsprechend dem detektierten Laserstrahl, die Speicherung der Messung und das Senden eines Befehlssignals zu einem piezokeramischen Wandler (5) für die Bewegung des wenigstens einen Spiegels (4) aufweist,
Verarbeiten der Messungen und Auswahl der Position des wenigstens einen Spiegels (4) entsprechend der detektierten Transmissionsspitze des Resonanzhohlraums (1) während der Suchphase, wobei die Verarbeitung vor einer Positionierungsphase stattfindet,
eine Positionierungsphase des wenigstens einen Spiegels (4) für die Steuerung der Länge des Resonanzhohlraums (1) in Reaktion auf die sich aus der Suchphase ableitende Information, wobei die Positionierungsphase die Bewegung des wenigstens einen Spiegels (4) aufweist, um die Länge des Resonanzholnlraums (1) zu ändern, um die ausgewählte Position entsprechend der detektierten Transmissionsspitze des Resonanzhohlraums (1) anzunehmen,
**dadurch gekennzeichnet, dass**
nur die in der Suchphase durch Bewegen des piezokeramischen Wandlers (5) in derselben Richtung wie die für die Positionierungsphase verwendete Bewegung erhaltenen Messungen für die Auswahl der Position des wenigstens einen Spiegels (4) entsprechend der detektierten Transmissionsspitze des Resonanzhohlraums (1) verwendet werden.

2. Verfahren nach Anspruch 1, **dadurch gekennzeichnet, dass** es die Verifizierung des Betriebs im Monolängsmode und die Bewertung der Bewegung in Bezug auf eine Frequenz der gepulsten Laserstrahlung und die Korrektur der Position des Spiegels (4) in Reaktion auf die erhaltenen Ergebnisse aufweist.

3. Verfahren nach Anspruch 2, **dadurch gekennzeichnet, dass** es die Detektion eines Ausschlagens zwischen benachbarten Moden der gepulsten Laserstrahlung (Out) in Bezug auf eine Ausgabe von dem Resonanzhohlraum (1), die Messung der Amplitude des Ausschlagens und den Befehl der Piezokeramik (5), Bewegungen (D) von wenigstens einem der Spiegel (4) zu erzeugen, um ein gegebenes spektrales Feld (2 FSR) abzudecken, wobei die Korrektur der Position des Spiegels (4) die Auswahl der optimalen Bewegung (D) aufweist, die der minimalen Amplitude des Ausschlagens oder der zentralen Position zwischen zwei Ausschlagspitzen entspricht, und den Befehl der Piezokeramik (5), die optimale Bewegung auszuführen, aufweist.

4. Verfahren nach Anspruch 2, **dadurch gekennzeichnet, dass** es die Detektion eines Ausschlagens zwischen einem Teilbereich der gepulsten LaserStrahlung (Out) in Bezug auf eine Ausgabe von dem Resonanzhohlraum (1) und einem bezüglich der Frequenz modulierten Teilbereich der gepulsten Laserstrahlung und die Messung der Frequenz des Ausschlagens, wobei die Korrektur der Position des Spiegels (4) die Bestimmung der optimalen Bewegung (D) des Spiegels auf der Basis der Differenz zwischen den Frequenzmessungen und der Frequenz der kontinuierlichen Strahlung aufweist, und den Befehl der Piezokeramik (5), die optimale Bewegung auszuführen, aufweist.

5. Verfahren nach Anspruch 2, **dadurch gekennzeichnet, dass** es die Detektion der Streifenmuster eines Teilbereichs der gepulsten Strahlung (Out) in Bezug auf eine Ausgabe von dem Resonanzhohlraum (1), für die veranlasst wird, dass sie durch ein Etalon läuft, die Analyse der Streifenmuster, die Verifizierung, dass das analysierte Signal ein Multimodesignal ist, die Detektion eines Ausschlagens zwischen benachbarten Moden des Multimodesignals, die Messung der Amplitude des Ausschlagens und den Befehl der Piezokeramik (5), Bewegungen (D) des Spiegels zu erzeugen, um ein gegebenes spektrales Feld (FSR) abzudecken, wobei die Korrektur der Position des Spiegels (4) die Auswahl der optimalen Bewegung (D), die der minimalen Amplitude des Ausschlagens entspricht, und den Befehl der Piezokeramik (5), die optimale Bewegung auszuführen, aufweist.

## Revendications

1. Procédé de fonctionnement d'un oscillateur laser à impulsions à mode longitudinal unique et à fréquence stabilisée, l'oscillateur laser comportant une cavité résonnante (1) comprenant un matériau actif (6) situé sur un axe optique entre au moins deux miroirs (3, 4), ledit procédé comportant :
l'éclairage dudit matériau actif (6) par un faisceau laser continu provenant de moyens (20) situés à l'extérieur de la cavité résonnante (1) pour faire fonctionner l'oscillateur laser en mode longitudinal unique,
l'activation dudit matériau actif (6) afin de l'exciter pour émettre un rayonnement laser à impulsions formé par une succession d'impulsions laser de sortie (Out) orientées vers l'un (4) desdits miroirs (3, 4) et sortant de la cavité résonnante (1) par l'intermédiaire dudit miroir (4), ledit procédé comportant les étapes consistant à _{:}
moduler la longueur de la cavité résonnante (1) dans une phase de recherche de la crête de transmission dudit faisceau laser continu par ladite cavité résonnante (1) pendant une période de temps (T) entre la génération d'une impulsion de ladite succession d'impulsions et celle de l'impulsion suivante,
ladite phase de recherche comportant la détection dudit faisceau laser continu transmis par la cavité résonnante (1) par l'intermédiaire de l'autre (3) desdits miroirs de cavité (3, 4), la mesure d'un signal correspondant au faisceau laser continu détecté, la mémorisation de ladite mesure et la transmission d'un signal de commande à un traducteur piézocéramique (5) pour le déplacement dudit au moins un miroir (4),
le traitement des mesures et la sélection de la position dudit au moins un miroir (4) correspondant à la crête de transmission détectée de la cavité résonnante (1) pendant la phase de recherche, ledit traitement se produisant avant une phase de positionnement,
une phase de positionnement dudit au moins un miroir (4) pour le contrôle de la longueur de la cavité résonnante (1) en réponse à l'information découlant de ladite phase de recherche, ladite phase de positionnement comprenant le déplacement dudit au moins un miroir (4) pour modifier la longueur de la cavité résonnante (1) afin d'assurer la position sélectionnée correspondant à la crête de transmission détectée de la cavité résonnante (1),
**caractérisé ce que**
seules les mesures obtenues pendant ladite phase de recherche en déplaçant le traducteur piézocéramique (5) dans la même direction que le mouvement utilisé pour la phase de positionnement sont utilisées pour ladite sélection de la position dudit au moins un miroir (4) correspondant à la crête de transmission détectée de la cavité résonnante (1).

2. Procédé selon la revendication 1, **caractérisé en ce qu'**il comporte la vérification du fonctionnement en mode longitudinal unique et l'évaluation du déplacement en fréquence du rayonnement laser à impulsions et la correction de la position dudit miroir (4) en réponse aux résultats obtenus.

3. Procédé selon la revendication 2, **caractérisé en ce qu'**il comporte la détection d'un battement entre des modes adjacents du rayonnement laser à impulsions (Out) lors de la sortie depuis ladite cavité résonnante (1), la mesure de l'amplitude dudit battement, et la commande de ladite piézocéramique (5) pour produire des déplacements (D) d'au moins un desdits miroirs (4) de manière à couvrir un champ spectral donné (2 FSR), la correction de la position dudit miroir (4) comportant la sélection du déplacement optimal (D) qui correspond à l'amplitude minimum du battement ou à la position centrale entre deux crêtes de battement et la commande de ladite piézocéramique (5) pour effectuer ledit déplacement optimal.

4. Procédé selon la revendication 2, **caractérisé en ce qu'**il comporte la détection d'un battement entre une partie du rayonnement laser à impulsions (Out) lors de la sortie depuis ladite cavité résonnante (1) et une partie modulée en fréquence dudit rayonnement laser continu et la mesure de la fréquence dudit battement, la correction de la position dudit miroir (4) comportant la détermination du déplacement optimal (D) dudit miroir (4) en fonction de la différence entre lesdites mesures de fréquence et la fréquence du rayonnement continu et la commande de ladite piézocéramique (5) pour effectuer ledit déplacement optimal.

5. Procédé selon la revendication 2, **caractérisé en ce qu'**il comporte la détection de franges d'interférence d'une partie du rayonnement à impulsions (Out) lors de la sortie depuis la cavité résonnante (1), qui est effectuée pour traverser un dispositif standard, l'analyse desdites franges d'interférence, la vérification que le signal analysé est un signal multimode, la détection d'un battement entre des modes adjacents dudit signal multimode, la mesure de l'amplitude dudit battement, et la commande de ladite piézocéramique (5) pour produire des déplacements (D) dudit miroir (4) de manière à couvrir un champ spectral donné (FSR), la correction de la position dudit miroir (4) comportant la sélection du déplacement optimal (D) qui correspond à l'amplitude minimum du battement et la commande de ladite piézocéramique (5) pour exécuter ledit déplacement optimal.
